# EUROPÄISCHE PATENTSCHRIFT

(11) **EP 1 024 913 B1**
(45) Veröffentlichungstag und Bekanntmachung des Hinweises auf die Patenterteilung: **08.08.2001**
(21) Anmeldenummer: 98950055.8
(22) Anmeldetag: 18.09.1998
(51) Int. Cl.: B21D 53/84, F16H 53/02

(54) **VERFAHREN UND VORRICHTUNG ZUR HERSTELLUNG EINER WELLE AUS EINEM ROHRSTÜCK**
METHOD AND DEVICE FOR PRODUCING A SHAFT FROM A TUBULAR WORKPIECE
PROCEDE ET DISPOSITIF POUR PRODUIRE UN ARBRE A PARTIR D'UN ELEMENT TUBULAIRE

(30) Priorität: 20.10.1997 DE 19745988; 19.12.1997 DE 19756673
(43) Veröffentlichungstag der Anmeldung: 09.08.2000
(73) Patentinhaber: Worringer, Josef, 47906 Kempen (DE)
(72) Erfinder: Worringer, Josef, 47906 Kempen (DE)
(74) Vertreter: Simons, Johannes, Dipl.-Ing.
(86) Internationale Anmeldenummer: EP9805963
(87) Internationale Veröffentlichungsnummer: WO9920414

(56) Entgegenhaltungen:
- DE-A- 4 427 201
- JP-A- 57 206 530
- JP-A- 58 132 325
- JP-A- 59 033 043
- US-A- 2 892 254
- US-A- 4 763 503

## Beschreibung

Die Erfindung betrifft ein Verfahren zur Herstellung einer Welle aus einem Rohrstück, wobei die Welle mindestens eine Auswölbung, wie ein Hublager, einen Nocken oder einen Lagerabsatz, aufweist. Darüber hinaus betrifft die Erfindung eine Vorrichtung zum Herstellen einer solchen Welle. Schließlich betrifft die Erfindung auch eine Nockenwelle, welche aus einem Rohrstück hergestellt ist. Wellen, insbesondere Nockenwellen dieser Art bestehen in der Regel aus Metall, insbesondere aus Stahl. Sie werden zur Gewichtsersparnis beispielsweise in Motoren anstelle geschmiedeter oder gegossener Bauteile verwendet, die für Kraftfahrzeuge bestimmt sind.

Ein mehrstufiges Verfahren zur Herstellung einer Nockenwelle, eine Vorrichtung zur Durchführung dieses Verfahrens und eine Nockenwelle der voranstehend genannten Art sind aus der amerikanischen Patentschrift US 2 892 254 bekannt. Gemäß dieser Druckschrift wird zur Herstellung der bekannten Nockenwelle ein Formwerkzeug verwendet, welches aus zwei blockartigen Werkzeughälften gebildet ist. In die im geschlossenen Zustand aufeinander liegenden Flächen der Werkzeughälften sind Höhlungen eingeformt, die gemeinsam eine Hohlform für die an der Welle herzustellende Nockenauswölbung bilden. Zur Herstellung der Welle mit der bekannten Vorrichtung wird zunächst der Rohrabschnitt, an welchem der erste Nocken der Welle erzeugt werden soll, in das Werkzeug eingelegt und das Rohrstück mit Fluid gefüllt. Anschließend wird das Rohrstück abgedichtet und mittels einer geeigneten Druckerzeugungseinrichtung ein Innendruck erzeugt, welcher hoch genug ist, um das Material des betreffenden Rohrabschnitts in die Hohlform des Werkzeugs zu pressen. Gleichzeitig ist ein achsialer Druck wirksam, der das Fließen des Rohrmaterials in die Höhlung begünstigt. Nach Abschluß der ersten Stufe der Formgebung wird das Werkzeug geöffnet und das Rohrstück axial voran bewegt, bis die zuvor erzeugte Nockenauswölbung in einer weiteren Höhlung des Werkzeugs liegt. Dann wird wieder der Innendruck aufgebaut, eine weitere Nockenauswölbung erzeugt und dieser Vorgang schrittweise wiederholt, bis alle Nocken der Welle fertiggestellt sind.

Die bekannte Vorrichtung ermöglicht zwar die Herstellung einer Nockenwelle von geringem Gewicht. Die praktische Erprobung derart hergestellter Nockenwellen zeigt jedoch, daß diese die an die Betriebseigenschaften gestellten Anforderungen nicht erfüllen. Darüber hinaus erweist sich die Herstellung der Nockenwellen nach dem bekannten Verfahren als umständlich und zeitaufwendig. Zudem ist es mit dem bekannten Verfahren nicht möglich, Nocken unterschiedlicher Form an einer Welle zu erzeugen.

Zur Beseitigung der Nachteile des aus der US 2 892 254 bekannten Herstellverfahrens ist in der deutschen Patentschrift DE 44 27 201 C2 vorgeschlagen worden, in einem ebenfalls mehrstufigen Kaltfließpreß-Verfahren zur Herstellung einer Nockenwelle aus einem Rohrstück zunächst eine Vorform der herzustellenden Nocken zu erzeugen. Die Ausbildung einer derartigen Vorform ermöglicht es, mehr Material in den Bereich der Nockenspitze anzuhäufen, als dies bei dem voranstehend erläuterten bekannten Verfahren möglich ist. Indem durch Aufbringen einer axialen Druckkraft auf das Rohrstück sichergestellt ist, daß während des Vorformens ständig beidseitig Material nachgeschoben wird, wird eine günstigere Massenverteilung im Bereich des jeweiligen Nockens erreicht. In mindestens einer weiteren Verarbeitungstufe wird bei dem aus der DE 44 27 201 C2 bekannten Verfahren nach dem Vorformen die Endform der Nocken hergestellt.

Das aus DE 44 27 201 C2 bekannte Verfahren ermöglicht zwar die Herstellung einer hinsichtlich ihrer Eigenschaften verbesserten Nockenwelle. In der Praxis zeigt sich jedoch, daß auch die nach diesem Verfahren hergestellten Nockenwellen nach wie vor nicht die Anforderungen erfüllen, die an ein serienreifes Bauteil gestellt werden. Zudem erweist es sich als schwierig, mit dem in der DE 44 27 201 C2 beschriebenen Herstellverfahren Nockenwellen von geeigneter Qualität in großen Stückzahlen herzustellen, da eine Vielzahl von Werkzeug und Vorrichtungswechseln für die Durchführung des Verfahrens erforderlich sind.

Die Aufgabe der Erfindung besteht darin, ein Verfahren und eine Vorrichtung der eingangs genannten Art zu schaffen, welche die kostengünstige, praxisgerechte Herstellung von mit Auswölbungen versehenen Wellen, insbesondere Nockenwellen, ermöglichen.

Die voranstehend angegebene Aufgabe wird durch ein Verfahren zur Herstellung einer Welle, die mindestens eine Auswölbung, wie ein Hublager, einen Nocken oder einen Lagerabsatz, aufweist, aus einem Rohrstück gelöst, bei dem das Rohrstück an einem Abschnitt radial abgestützt wird, die an den Bereich der zu erzeugenden Auswölbung angrenzt, bei dem das Rohrstück unter Innendruck gesetzt wird, bei dem durch eine mit dem Innendruck zusammenwirkende Beaufschlagung des Rohrstücks mit einer in axialer Richtung wirkenden Druckkraft ein an den radial abgestützten Abschnitt angrenzender Rohrabschnitt derart gestaucht wird, daß der Außendurchmesser dieses gestauchten Rohrabschnitts größer ist als der Außendurchmesser des ungestauchten Rohres, bei dem anschließend ein Formwerkzeug auf den gestauchten Rohrabschnitt zugestellt wird, welches eine Höhlung aufweist, die eine der Endform der zu erzeugenden Auswölbung entsprechende Hohlform bildet, und bei dem durch Aufbringen radial wirkender Druckkräfte mittels des Formwerkzeuges aus dem gestauchten Rohrabschnitt die Auswölbung geformt wird, wobei das Rohrstück während des gesamten Formgebungsvorgangs mit Innendruck beaufschlagt bleibt.

Gemäß dem erfindungsgemäßen Verfahren wird zunächst ungehindert durch ein Formwerkzeug aufgrund des Zusammenwirkens von Innendruck und axialem Druck eine Stauchung des Rohrstücks in dem Bereich erzeugt, an dem die jeweilige Auswölbung erzeugt werden soll. Dabei stellt der Innendruck sicher, daß die durch die Stauchung hervorgerufene Materialansammlung zu einer Durchmessererweiterung der Rohrstücke in dem betreffenden Abschnitt führt. Auf diese Weise wird in dem betreffenden Rohrabschnitt Material angehäuft, welches für die anschließende Ausformung des Nockens benötigt wird. Dann wird das Formwerkzeug geschlossen. Sobald das Werkzeug den gestauchten Abschnitt berührt, wird ein aus radialer Richtung auf das Rohrstück wirkender Druck ausgeübt. Dieser Druck prägt dem nach wie vor unter Innendruck stehenden Rohrmaterial, bei dem es sich vorzugsweise um Metall, insbesondere Stahl, handelt, eine bestimmte, durch die Form der Werkzeughöhlung vorgegebene Fließrichtung auf.

Die Besonderheit des erfindungsgemäßen Kaltfließpreß-Verfahrens besteht, wie erwähnt, darin, daß das Rohrmaterial nicht von Beginn der Herstellung einer Auswölbung an in eine bestimmte Form gezwungen wird, sondern daß zuerst eine Stauchung des Rohrmaterials und damit einhergehend eine Materialanhäufung hervorgerufen wird, die hinsichtlich ihrer Form nicht bestimmt ist. Da das Material während des Stauchens frei fließen kann, ist auf einfache Weise sichergestellt, daß beim Erzeugen der Endform der Auswölbung so viel Material zur Verfügung steht, daß Ausdünnungen der Wände der Auswölbung vermieden werden. Dies ermöglicht es durch eine entsprechende Formgebung der Hohlform des Formwerkzeugs und durch eine geeignete Wahl des Zeitpunkts, an dem das Werkzeug zugestellt wird, mit dem erfindungsgemäßen Verfahren gezielt an solchen Stellen der Auswölbung viel Material zu versammeln, die im Einsatz einer erhöhten Belastung ausgesetzt sind.

Ein weiterer Vorteil der erfindungsgemäßsn Aufeinanderfolge der Bearbeitungsschritte ist, daß die Fertigung von mit Auswölbungen versehenen Wellen auf einer einzigen Maschine durchgeführt werden kann. Zeit- und kostenaufwendige Werkzeug- oder Vorrichtungswechsel müssen nicht durchgeführt werden. Daher eignet sich das erfindungsgemäße Verfahren in besonderer Weise zur serienmäßigen Herstellung von mit Auswölbungen versehenen Wellen, insbesondere Nockenwellen, für den Kraftfahrzeugbau.

Eine besonders günstige Materialverteilung im Bereich der Wandungen der Auswölbung kann dadurch erreicht werden, daß das Rohrstück während der mittels des Formwerkzeugs durchgeführten Formgebung unter axialer Druckkraftbelastung gehalten wird. Durch das Aufrechterhalten des axialen Drucks während der Formgebung durch das Formwerkzeug kann sichergestellt werden, daß in ausreichendem Maße Material nachgeschoben wird, um die gewünschten Wanddicken und Materialverteilungen im Bereich der Auswölbung zu erreichen.

Eine zusätzliche Verbesserung der Abformgenauigkeit kann dadurch erreicht werden, daß zum Ende des Formgebungsvorgangs bei anliegendem Formwerkzeug der Innendruck des Rohrstücks erhöht wird. Die Erhöhung des Rohrinnendrucks im letzten Stadium der Formgebung bewirkt, daß das Rohrmaterial sicher auch in die Zonen der Hohlform des Werkzeugs fließt, die es bei einem konstant aufrechterhaltenem Druck nicht erreichen würde.

Sollen an dem Rohrstück mehrere axial beabstandete Auswölbungen schrittweise aufeinanderfolgend erzeugt werden, so kann der für die Durchführung des Verfahrens benötigte vorrichtungstechnische Aufwand dadurch minimiert werden, daß die radiale Abstützung durch jeweils dasjenige Formwerkzeug gebildet ist, welches zur Herstellung der jeweils zuvor erzeugten Auswölbung verwendet worden ist.

Eine im Zusammenhang mit der Herstellung mehrerer Auswölbungen an dem Rohrstück praxisgerechte, einen ebenfalls geringen vorrichtungstechnischen Aufwand voraussetzende Ausgestaltung des erfindungsgemäßen Verfahrens ist dadurch gekennzeichnet, daß, beginnend mit der Auswölbung, welche dem in Wirkrichtung der axialen Druckkraft vorderen Ende des Rohrstücks zugeordnet ist, die Auswölbungen schrittweise nacheinander geformt werden. Bei einer derartigen Verfahrensweise ist jeweils nur eine Druckerzeugungseinrichtung für das Aufbringen des axialen Drucks und des Innendrucks erforderlich.

Bei der Herstellung mehrerer Auswölbungen an dem Rohrstück kann eine Verkürzung der Bearbeitungszeiten bei ebenfalls geringem vorrichtungstechnischem Aufwand dadurch erreicht werden, daß das Rohrstück beidenends mit einer axial wirkenden Druckkraft beaufschlagt wird und die Auswölbungen paarweise ausgehend vom mittleren Paar der Auswölbungen geformt werden.

Hinsichtlich der Vorrichtung wird die oben angegebene Aufgabe durch eine Vorrichtung zum Herstellen einer Welle, die mindestens eine Auswölbung, wie ein Hublager, einen Nocken oder einen Lagerabsatz, aufweist, aus einem Rohrstück gelöst, die mit einer Abstützeinrichtung, welche dazu vorgesehen ist, das Rohrstück radial umgreifend einzuspannen, mit einer ersten Druckerzeugungseinrichtung, mittels der das Rohrstück in axialer Richtung mit einer Druckkraft beaufschlagbar ist, mit einer zweiten Druckerzeugungseinrichtung, mittels der ein in den Innenraum des Rohrstücks eingeleitetes Druckmedium mit Druck beaufschlagt wird, und mit einem mindestens einmal geteilten Formwerkzeug ausgestattet ist, welches in radialer Richtung auf das Rohrstück zustellbar ist und welches eine Höhlung aufweist, die eine der Endform der herzustellenden Auswölbung entsprechende Hohlform bildet. Besonders geeignet ist die erfindungsgemäße Vorrichtung zur Durchführung des erfindungsgemäßen Verfahrens.

Mit der erfindungsgemäßen Vorrichtung ist es möglich, in einem automatisierten Verfahren große Stückzahlen mit einer oder mehreren Auswölbungen versehener Wellen aus Rohrstücken herzustellen. Durch die Abstützeirrichtung kann das Rohrstück auf einfache Weise so abgestützt werden, daß im ersten Schritt ein freies Aufstauchen des jeweiligen Rohrabschnitts problemlos möglich ist. Der für das Aufstauchen benötigte Raum steht während dieses Arbeitsschritts zur Verfügung, da sich die Teile des Formwerkzeugs in dieser Phase aufgrund ihrer radialen Zustellbarkeit entfernt von dem Rohrstück befinden. Auf diese Weise ist kein Werkzeug- oder Vorrichtungswechsel notwendig, wenn auf der erfindungemäßen Vorrichtung Wellen nach dem erfindungsgemäßen Verfahren hergestellt werden sollen.

Sowohl hinsichtlich des Platzbedarfs als auch hinsichtlich der seitlichen Abstützung des Formwerkzeugs ist es günstig, wenn das Formwerkzeug scheibenartig ausgebildet ist. Dies gilt insbesondere dann, wenn für die Herstellung von Wellen mit mehreren Auswölbungen mehrere Formwerkzeuge in Achsrichtung der Vorrichtung scheibenweise nebeneinander angeordnet sind. In diesem Fall wird die Herstellung der einzelnen Auswölbungen der Welle in der Regel schrittweise aufeinanderfolgend durchgeführt werden. Dabei kann das Formwerkzeug, welches für die Herstellung der im jeweils vorangehenden Arbeitsschritt hergestellen Auswölbung genutzt wurde, als Abstützeinrichtung für die jeweils anschließend herzustellende Auswölbung eingesetzt werden.

Einfach herzustellen ist eine erfindungsgemäße Vorrichtung dann, wenn das Formwerkzeug mittengeteilt ist.

Eine hohe Genauigkeit bei der Bewegung der Teile des geteilten Formwerkzeugs relativ zueinander, kann auf einfache Weise dadurch erreicht werden, daß die Teile des Formwerkzeugs formschlüssig miteinander verkoppelt sind.

Das erfindungsgemäße Verfahren eignet sich insbesondere zur Herstellung der Nockenwellen, bei denen die Wandstärke der Nocken mindestens so groß ist wie die Wandstärke des Grundmaterials, aus dem die Nockenwelle hergestellt ist, oder mindestens so groß ist wie die Wandstärke der zwischen den Nocken liegenden Wandabschnitte.

Ebenso ist das erfindungsgemäße Verfahren geeignet zur Herstellung von Nockenwellen, bei denen die Nocken im Bereich der Nockenspitzen eine Wandstärke besitzen, die mindestens so groß ist wie im Bereich der den Nockenspitzen jeweils gegenüberliegenden Wandabschnitte. Vorzugsweise ist dabei die Wandstärke im Bereich der Nockenspitze um etwa 20% größer als die Wandstärke des der Nockenspitze gegenüberliegenden Wandabschnitts.

Durch die bei den Nockenwellen vorgesehene Materialverteilung ist sichergestellt, daß die Nocken und speziell die Nockenspitzen auch wechselnd hohen, Materialverschleiß mit sich bringenden Belastungen, wie sie beispielsweise beim Einsatz in einem PKW-Motor auftreten, in ausreichender Weise und über eine ausreichend lange Einsatzdauer standhalten. Dies ermöglicht es, den Aufwand für die Nachbearbeitung der Nockenwellen auf ein Minimum zu reduzieren.

Nachfolgend wird die Erfindung anhand einer ein Ausführungsbeispiel darstellenden Zeichnung näher erläutert. Es zeigen schematisch:
- Fig. 1: eine Vorrichtung zum Herstellen einer Nockenwelle aus einem Rohrstück in einer ersten Betriebsstellung in einem Längsschnitt;
- Fig. 2: die Vorrichtung nach Fig. 1 in einer zweiten Betriebsstellung in einem vergrößerten, ausschnittsweisen Längsschnitt;
- Fig. 3: die Vorrichtung nach Fig. 1 in einer dritten Betriebsstellung im Längsschnitt;
- Fig. 4: die Vorrichtung nach Fig. 1 in einer vierten Betriebsstellung im Längsschnitt;
- Fig. 5: die Vorrichtung nach Fig. 1 in einer fünften Betriebsstellung im Längsschnitt;
- Fig. 6: eine Nockenwelle in einem Querschnitt;
- Fig. 7: eine zweite Nockenwelle im Längsschnitt in ausschnittweiser Darstellung.

Die in den Figuren gezeigte Vorrichtung 1 zur Herstellung einer Nockenwelle W aus einem Rohrstück R weist eine Aufnahme 2 auf, in der das aus einer Stahllegierung bestehende Rohrstück R eingelegt ist. Die Aufnahme 2 ist achsparallel zur Längsachse L des Rohrstücks R verschiebbar im nicht dargestellten Gestell der Vorrichtung 1 gelagert. Koaxial zum Rohrstück R ist ein erster Hydraulikzylinder 3 und ein zweiter, diametral gegenüberliegend angeordneter zweiter Hydraulikzylinder 4 angeordnet, deren Kolben 5,6 Drückübertragungsstücke 7,8 tragen.

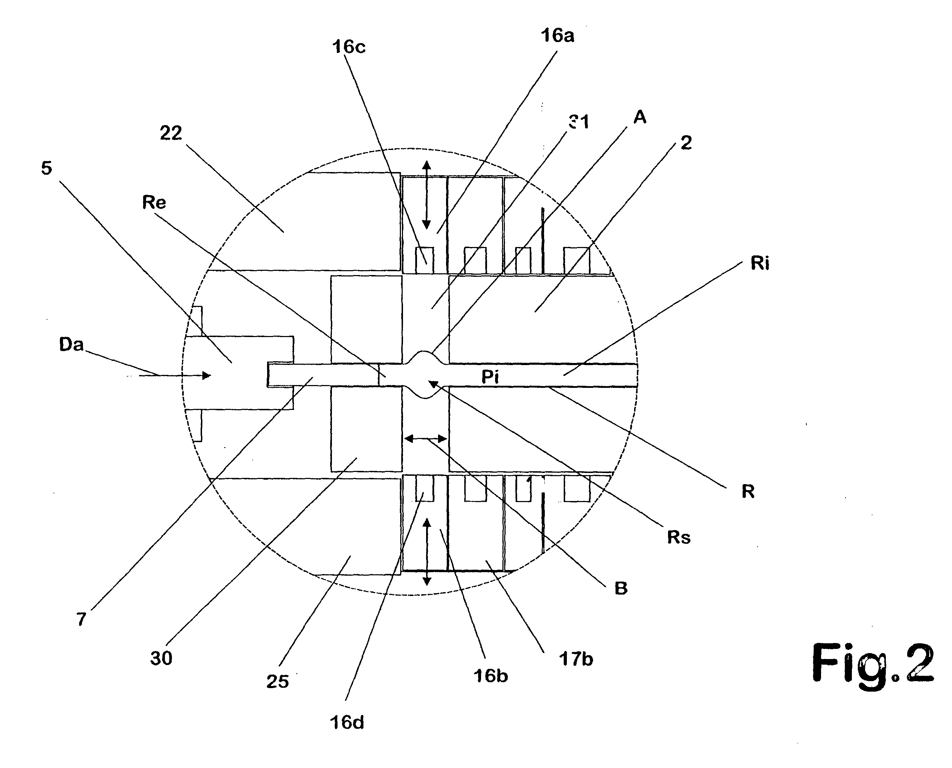

Bei an das Rohrstück R herangefahrenen Druckübertragungsstücken 7,8 (Fig. 2 - 4) ist das Rohrstück R axial zwischen den Druckübertragungsstücken 7,8 eingespannt, so daß mittels der Druckübertragungsstücke 7,8 die von den Hydraulikzylindern 3,4 erzeugte axiale Druckkraft Da von dessen beiden Enden auf das Rohrstück R einwirkt. Gleichzeitig dichten die Druckübertragungsstücke 7,8 in diesem Betriebszustand die stirnseitigen Öffnungen des Rohrstücks R ab.

Der Kolben 6 des Hydraulikzylinders 4 und das von ihm getragene Druckübertragungsstück 8 weisen zusätzlich eine auf der Stirnseite des Druckübertragungsstücks 8 mündende Verbindungsleitung 9 auf, die mit einem auf der Mantelfläche des Kolbens 6 angeordneten Anschluß 10 für eine Druckleitung 11 verbunden ist. Über die Druckleitung 11 ist die Verbindungsleitung 9 an eine Hydraulikpumpe 12 angeschlossen, durch die ein Fluid in den Innenraum Ri des Rohrstücks R als Druckmedium gefüllt werden kann. Durch Druckbeaufschlagung des in den Innenraum Ri des Rohres R gefüllten Fluides kann ein Innendruck Pi in dem Rohrstück R erzeugt werden.

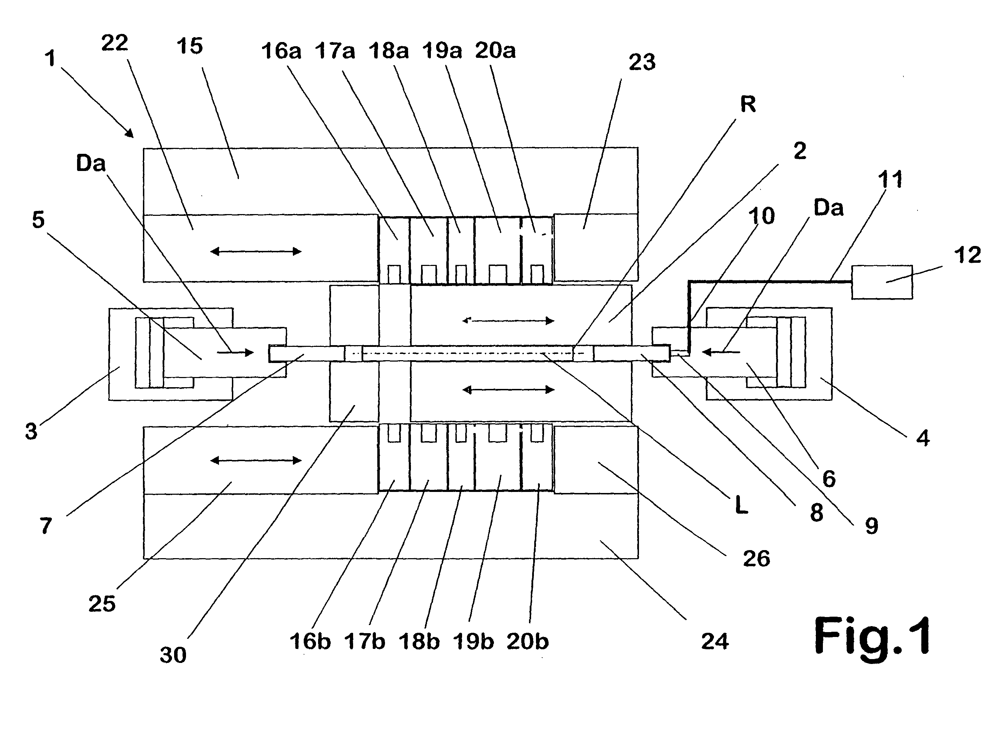

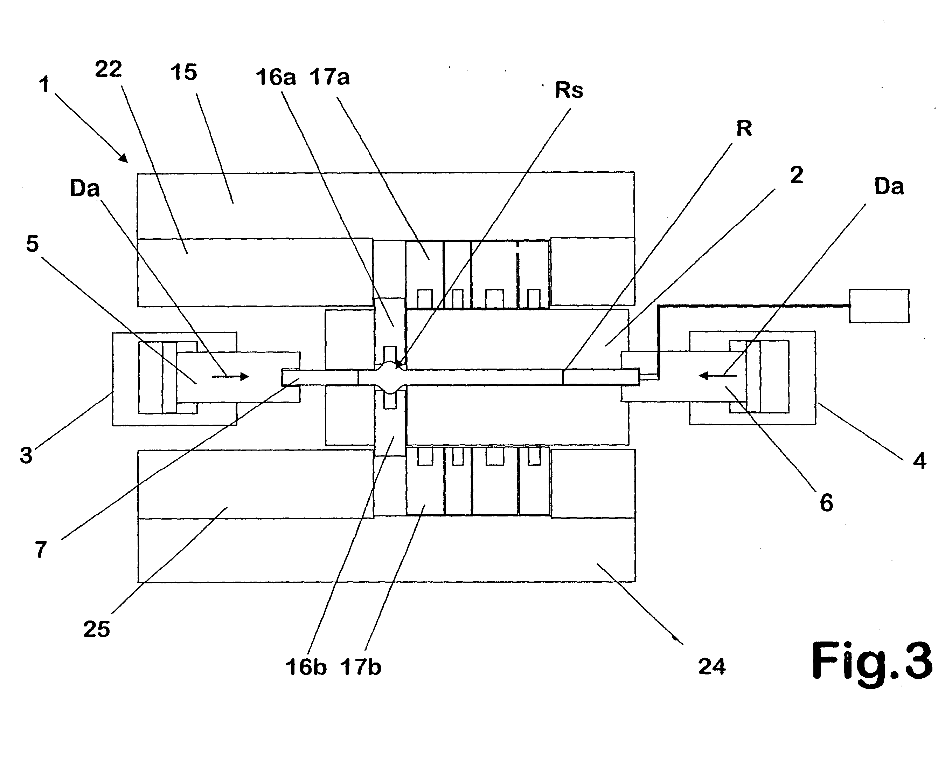

In einer oberen Stelleinrichtung 15 der Vorrichtung 1 sind nebeneinander die oberen Formwerkzeughälften 16a,17a,18a,19a,20a mehrerer scheibenförmig ausgebildeter, mittengeteilter Formwerkzeuge angeordnet, welche normal zur Längsachse L des Rohrstücks R positioniert sind. Mittels nicht gezeigter Stellelemente können die Formwerkzeughälften 16a,17a,18a,19a,20a in radialer Richtung auf das Rohrstück R zugestellt werden (Fig. 3). Jede Formwerkzeughälfte 16a,17a,18a,19a,20a weist eine Höhlung 16c auf, deren Form der Form der einen Hälfte der an dem Rohrstück R jeweils zu erzeugenden Nocken N1 bzw. N2 entspricht. Zusätzlich wird ein Schieber 22 von der Stelleinrichtung 15 getragen, der achsparallel zur Längsachse L des Rohrstücks R verschiebbar ist und in dem in Fig. 1 gezeigten Zustand das aus den Formwerkzeughälften 16a,17a,18a,19a,20a gebildete Paket gegen einen Anschlag 23 der Stelleinrichtung 16 drückt.

In entsprechender Weise werden in dem in Fig. 1 gezeigten Betriebszustand Formwerkzeughälften 16b,17b,18b,19b,20b in einer unteren Stelleinrichtung 24 der Vorrichtung 1 durch einen Schieber 25 gegen einen Anschlag 26 der Stelleinrichtung 24 gedrückt. Die Formwerkzeughälften 16b,17b,18b,19b,20b sind entsprechend der Formwerkzeughälften 16a,17a,18a,19a,20a aufgebaut und weisen Höhlungen 16d auf, welche gemeinsam mit den jeweiligen Höhlungen 16c der Formwerkzeughälften 16a,17a,18a,19a,20a jeweils eine Hohlform für die herzustellenden Nocken N1 oder N2 der Nockenwelle bilden.

Wie die Formwerkzeughälften 16a,17a,18a,19a,20a können auch die Formwerkzeughälften 16b,17b,18b,19b,20b mittels nicht dargestellter Steilelemente radial auf das Rohrstück R zugestellt werden.

Eine erste radiale Abstützung des Rohrstücks R ist in dem in Fig. 1 gezeigten Betriebszustand durch eine Abstützeinrichtung 30 gebildet, welche den dem Hydraulikzylinder 3 zugeordneten Endabschnitt Re des Rohrstücks R radial umgreift. Zwischen der Abstützvorrichtung 30 und der Stirnfläche der Aufnahme 2 ist bei dem in Fig. 1 gezeigten Betriebszustand ein freier Raum 31 ausgebildet, dessen Breite der Breite B der Formwerkzeughälften 16a,16b entspricht.

Zur Herstellung eines ersten Nockens N1 wird das unter Innendruck Pi stehende Rohrstück R durch Druckbeaufschlagung der Hydraulikzylinder 3,4 mit der in axialer Richtung wirkenden Druckkraft Da beaufschlagt. Dies führt zur Ausbildung einer Stauchung A im freien Raum 31 zwischen der Stirnfläche der Aufnahme 2 und der Abstützvorrichtung 30. Durch den Innendruck Pi des Rohres R ist die Fließrichtung des Rohrmaterials dabei derart gerichtet, daß der Durchmesser der Stauchung A größer ist als der des ungestauchten Rohrstücks R (Fig. 2).

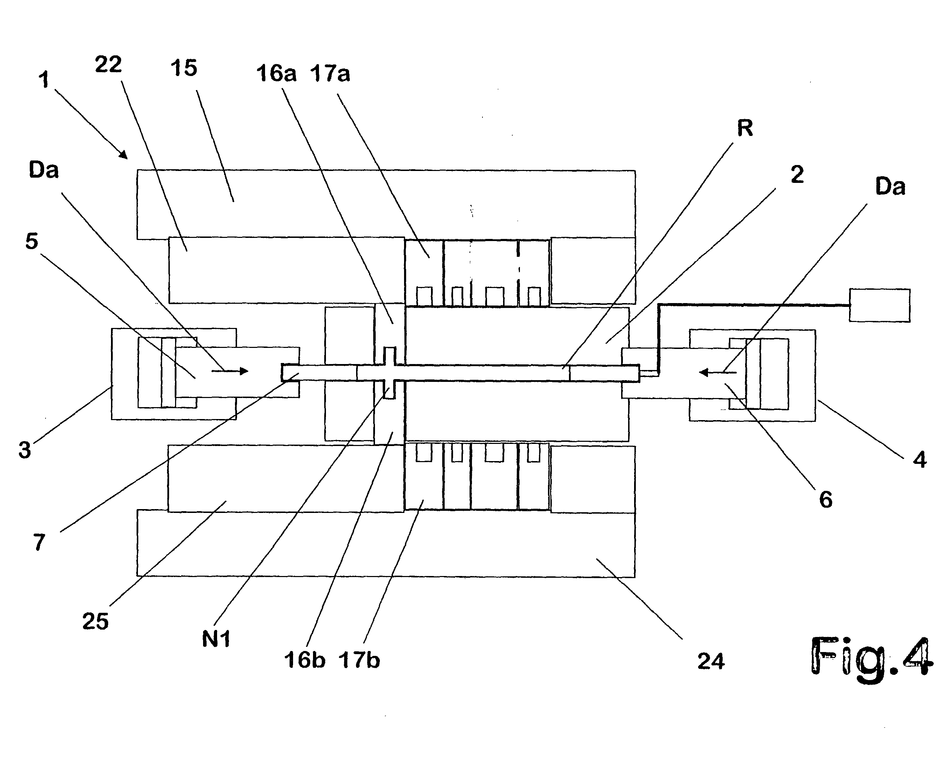

Anschließend werden die Formwerkzeughälften 16a,16b mittels der nicht dargestellten Stellelemente in radialer Richtung auf das Rohr R zugestellt, bis sie auf der Stauchung A sitzen (Fig. 3). Indem dann die Zustellbewegung der Formwerkzeughälften 16a,16b fortgesetzt wird, zwingen die Formwerkzeughälften 16a,16b mit ihren Höhlungen 16c,16d dem gestauchten Material im Bereich des Rohrabschnitts Rs eine Fließrichtung auf, die dazu führt, daß die Stauchung A die durch die Höhlungen 16c,16d gebildete Hohlform ausfüllen (Fig. 4).

Durch eine Verschiebung der Schiebers 22,25 in axialer Richtung werden die Formwerkzeughälften 16a,16b schließlich in ihrer Endstellung verriegelt. Anschließend wird die Aufnahme 2 in Achsrichtung zurückgezogen, so daß zwischen den Formwerkzeughälften 16a,16b ein neuer freier Raum 32 entsteht. Gleichzeitig bilden die Formwerkzeughälften 16a,16b eine radiale Abstützung des Rohres in dem Abschnitt, der an den Rohrabschnitt angrenzt, in dem der nächste Nocken erzeugt werden soll.

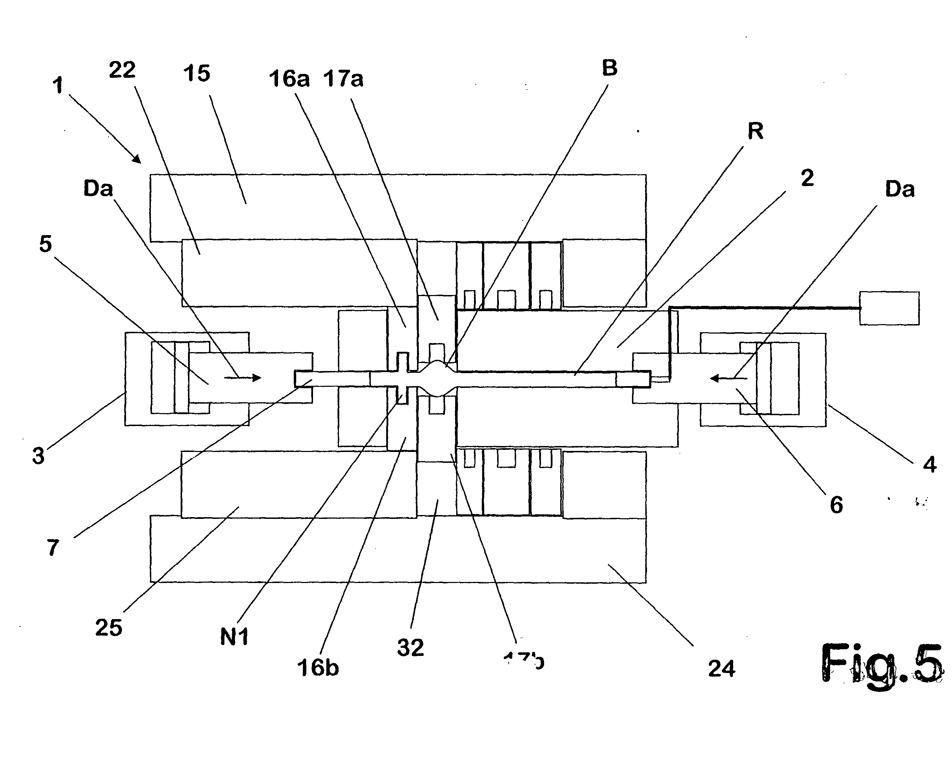

In dem Raum 32 wird durch entsprechende Beaufschlagung des Rohres R mit einer axialen Druckkraft bei unverändert beibehaltenem Innendruck Pi eine weitere Stauchung B erzeugt (Fig. 5). Anschließend werden die Formwerkzeughälften 17a,17b zugestellt und ein weiterer Nocken in derselben Weise erzeugt, wie sie voranstehend für den Nocken N1 beschrieben worden ist.

In entsprechender Weise werden anschließend die restlichen Nocken der jeweils herzustellenden Nockenwelle erzeugt. Nachdem alle Formwerkzeughälften 16a,16b,17a,17b,18a,18b,19a,19b,20a,20b an dem Rohr anliegen, wird der Innendruck Pi kurzfristig erhöht. Dies führt dazu, daß das Material des Rohrs R auch in die Zonen der Höhlungen 16c,16d der Formwerkzeughälften 16a-20b fließt, die es bis dahin noch nicht erreicht hat.

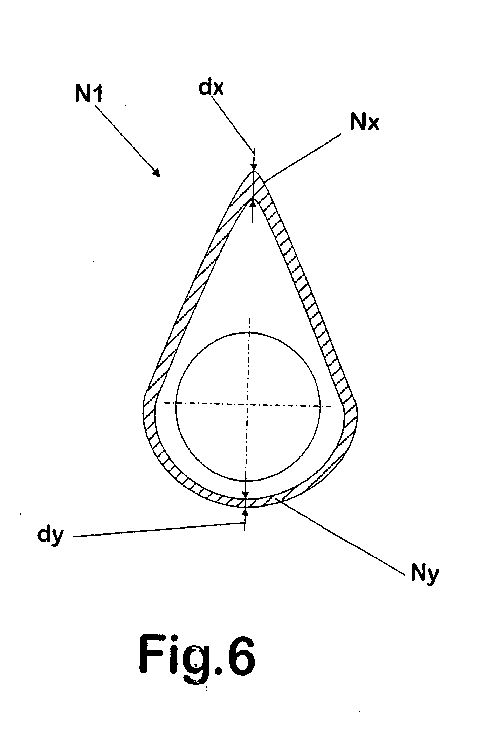

Die Nocken N1 einer ersten in der voranstehend beschriebenen Weise hergestellten Nockenwelle weisen im Bereich ihrer Nockenspitze Nx eine Wandstärke dx auf, die mindestens genauso groß ist wie die Wandstärke dy im der Nockenspitze Nx gegenüberliegenden Wandabschnitt Ny (Fig. 6). Dies wird durch eine geeignete Wahl der Form der Höhlungen 16c,16d der Formwerkzeughälften 16a-20b, durch die Wahl der im Bereich des jeweils gestauchten Abschnitts gesammelten Menge an Rohrmaterial und durch die Wahl des Zeitpunkts erreicht, an dem die jeweiligen Formwerkzeughälften 16a,20b auf das Rohr R zugestellt werden.

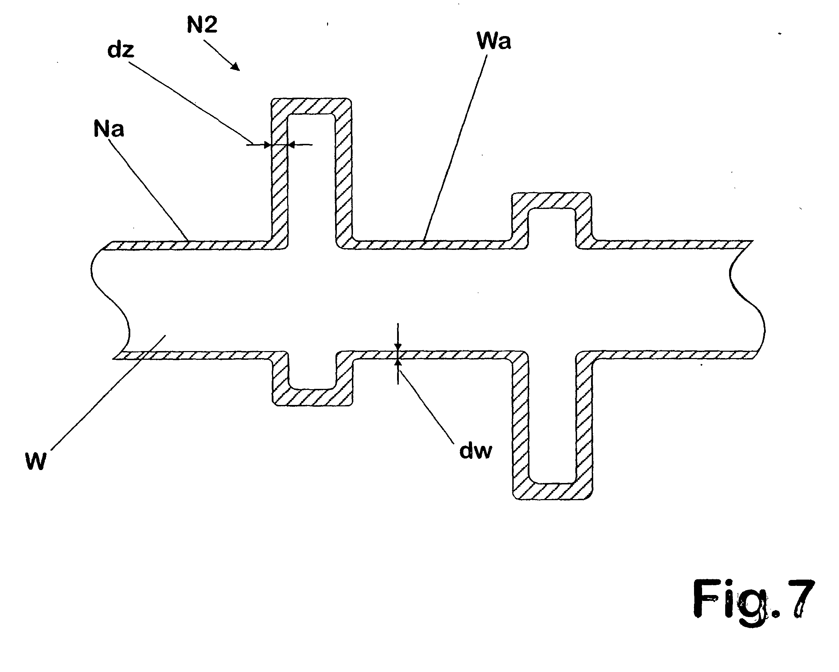

Bei der in Figur 7 gezeigten zweiten nach dem erfindungsgemäßen Nockenwelle W ist die Wandstärke dz im Bereich der Nocken N2 mindestens genauso stark ausgebildet wie die Wandstärke dw im Bereich der Abschnitte Wa, die zwischen den Nocken N2 angeordnet sind.

## Patentansprüche

1. Verfahren zur Herstellung einer Welle, die mindestens eine Auswölbung, wie ein Hublager, einen Nocken (N1,N2) oder einen Lagerabsatz, aufweist, aus einem Rohrstück (R), bei dem
- das Rohrstück (R) an einem Abschnitt (Re) radial abgestützt wird, der an den Bereich der zu erzeugenden Auswölbung angrenzt,
- das Rohrstück (R) unter Innendruck (Pi) gesetzt wird, welcher während des gesamten Formgebungsvorgangs aufrechterhalten bleibt,
- durch eine mit dem Innendruck (Pi) zusammenwirkende Beaufschlagung des Rohrstücks mit einer in axialer Richtung wirkenden Druckkraft (Da) ein an den radial abgestützten Abschnitt (Re) angrenzender Rohrabschnitt (Rs) derart gestaucht wird, daß der Außendurchmesser dieses gestauchten Rohrabschnitts (Rs) größer ist als der Außendurchmesser des ungestauchten Rohrstücks (R),
- anschließend ein Formwerkzeug (16a-20b) auf den gestauchten Rohrabschnitt (Rs) zugestellt wird, welches eine Höhlung (16c,16d) aufweist, die eine der Endform der zu erzeugenden Auswölbung entsprechende Hohlform bildet, und
- durch Aufbringen radial wirkender Druckkräfte mittels des Formwerkzeuges (16a-20b) aus dem gestauchten Rohrabschnitt (Rs) die Auswölbung geformt wird.

2. Verfahren nach Anspruch 1, d**adurch gekennzeichnet, daß** das Rohrstück (R) während der mittels des Formwerkzeugs (16a-20b) durchgeführten Formgebung unter Belastung durch die axiale Druckkraft (Da) gehalten wird.

3. Verfahren nach Anspruch 1 oder 2, **dadurch gekennzeichnet, daß** zum Ende des Formgebungsvorgangs bei an dem Rohrstück (R) anliegendem Formwerkzeug (16a-20b) der Innendruck (Pi) des Rohrstücks (R) erhöht wird.

4. Verfahren nach einem der voranstehenden Ansprüche, **dadurch gekennzeichnet, daß** an dem Rohrstück (R) schrittweise aufeinanderfolgend mehrere Auswölbungen erzeugt werden und daß die radiale Abstützung durch jeweils dasjenige Formwerkzeug (16a-20b) gebildet ist, welches zur Herstellung der jeweils zuvor erzeugten Auswölbung verwendet worden ist.

5. Verfahren nach einem der voranstehenden Ansprüche,
**dadurch gekennzeichnet, daß** mehrere Auswölbungen an dem Rohrstück (R) erzeugt werden, indem beginnend mit der Auswölbung, welche dem in Wirkrichtung der axialen Druckkraft (Da) vorderen Ende des Rohrstücks (R) zugeordnet ist, die Auswölbungen schrittweise nacheinander geformt werden.

6. Verfahren nach einem der Ansprüche 1 bis 4, **dadurch gekennzeichnet, daß** mehrere Auswölbungen an dem Rohrstück (R) erzeugt werden, indem das Rohrstück (R) beidenends mit einer axial wirkenden Druckkraft (Da) beaufschlagt wird und die Auswölbungen paarweise ausgehend vom mittleren Paar der Auswölbungen geformt werden.

7. Vorrichtung zum Herstellen einer Welle, die mindestens eine Auswölbung, wie ein Hublager, einen Nocken (N1,N2) oder einen Lagerabsatz, aufweist, aus einem Rohrstück (R)
- mit einer Abstützeinrichtung, welche dazu vorgesehen ist, das Rohrstück (R) radial umgreifend einzuspannen,
- mit einer ersten Druckerzeugungseinrichtung (3,4), mittels der das Rohrstück (R) in axialer Richtung mit einer Druckkraft (Da) beaufschlagbar ist,
- mit einer zweiten Druckerzeugungseinrichtung (12), mittels der ein in den Innenraum (Ri) des Rohrstücks (R) eingeleitetes Druckmedium mit Druck beaufschlagbar ist, und
- mit einem mindestens einmal geteilten Formwerkzeug, welches in radialer Richtung auf das Rohrstück (R) zustellbar ist und welches eine Höhlung aufweist, die eine der Endform der herzustellenden Auswölbung entsprechende Hohlform bildet.

8. Vorrichtung nach Anspruch 7, **dadurch gekennzeichnet, daß** das Formwerkzeug scheibenartig ausgebildet ist.

9. Vorrichtung nach Anspruch 8, **dadurch gekennzeichnet, daß** für die Herstellung von Wellen mit mehreren Auswölbungen mehrere Formwerkzeuge in Achsrichtung der Vorrichtung scheibenweise nebeneinander angeordnet sind.

10. Vorrichtung nach Anspruch 9, **dadurch gekennzeichnet, daß** die Formwerkzeuge die Abstützeinrichtung bilden.

11. Vorrichtung nach einem der Ansprüche 7 bis 10, **dadurch gekennzeichnet , daß** das Formwerkzeug mittengeteilt ist.

12. Vorrichtung nach einem der Ansprüche 7 bis 11, **dadurch gekennzeichnet, daß** die Teile (16a-20b) des Formwerkzeugs formschlüssig miteinander verkoppelt sind.

## Claims

1. A method for producing a shaft comprising at least one bulge such as a lifting bearing, a cam (N1, N2) or a bearing shoulder, from a tube piece (R) in which
- the tube piece (R) is radially supported at a section (Re) which adjoins the region of the bulge to be generated;
- the tube piece (R) is subjected to internal pressure (Pi) which is maintained during the entire forming process;
- by subjecting the tube piece to a pressure force (Da) acting in radial direction, said pressure force acts together with the internal pressure (Pi) and upsets a tube section (Rs) adjoining the radially supported section (Re) such that the exterior diameter of this upset tube section (Rs) exceeds the exterior diameter of the non-upset tube piece (R);
- subsequently a form tool (16a-20b) is applied to the upset tube section (Rs), said form tool comprising a hollow (16c, 16d) which forms a hollow shape that corresponds to the final shape of the bulge to be generated; and
- by applying radially acting pressure forces by means of the form tool (16a-20b) the bulge is formed from the upset tube section (Rs).

2. The method according to claim 1, characterised in that during the forming process carried out by means of the form tool (16a-20b), the tube piece (R) is held under load by the axial pressure force (Da).

3. The method according to claims 1 or 2, characterised in that towards the end of the forming process, with the form tool (16a-20b) applied to the tube piece (R), the internal pressure (Pi) in the tube piece (R) is increased.

4. The method according to one of the preceding claims, characterised in that on the tube piece (R) several bulges are made in sequential steps and that in each instance the radial support is provided by that form tool (16a-20b) which has been used to produce the bulge which in each instance has been generated previously.

5. The method according to one of the preceding claims, characterised in that several bulges are generated on the tube piece (R) in that the bulges are formed in sequential steps, starting with the bulge which is associated with the front end of the tube piece (R) when seen in the direction of action of the axial pressure force (Da).

6. The method according to one of claims 1 to 4, characterised in that several bulges are generated on the tube piece (R) in that both ends of the tube piece (R) are subjected to an axially acting pressure force (Da) and in that the bulges are formed in pairs, starting from the middle pair of the bulges.

7. A device for producing a shaft comprising at least one bulge such as a lifting bearing, a cam (N1, N2) or a bearing shoulder, from a tube piece (R)
- with a support device which is provided for clamping the tube piece (R) in a radially encompassing manner;
- with a first pressure generation device (3, 4) by means of which the tube piece (R) can be subjected to a pressure force (Da) in axial direction;
- with a second pressure generation device (12) by means of which a pressure medium that is introduced into the interior space (Ri) of the tube piece (R) can be pressurised; and
- with a form tool which is split at least once, which can be fed in radial direction to the tube piece (R) and which comprises a hollow that forms a hollow shape corresponding to the final shape of the bulge to be produced.

8. The device according to claim 7, characterised in that the form tool is of disk-like shape.

9. The device according to claim 8, characterised in that for production of shafts comprising several bulges, several form tools are arranged in axial direction of the device, with one disk being arranged beside another.

10. The device according to claim 9, characterised in that the form tools constitute the support device.

11. The device according to one of claims 7 to 10, characterised in that the form tool is split in the middle.

12. The device according to one of claims 7 to 11, characterised in that the parts of the form tool (16a-20b) are interconnected having positive fit.

## Revendications

1. Procédé pour la fabrication d'un arbre comportant au moins un bombement, comme un palier élévateur, une came (N1, N2) ou un talon de palier, à partir d'une pièce tubulaire (R), sur lequel :
- la pièce tubulaire (R) est étayée radialement sur une section (Re) située dans la zone contiguë au bombement à fabriquer,
- la pièce tubulaire (R) est mise sous pression interne (Pi), cette pression restant la même pendant tout le processus de façonnage,
- en appliquant à la pièce tubulaire conjointement à la pression interne (Pi) une force de pression (Da) agissant dans le sens axial, une section du tube (Rs) contiguë à la section étayée radialement (Re) est refoulée de sorte que le diamètre extérieur de cette section tubulaire (Rs) soit plus grand que le diamètre extérieur de la pièce tubulaire non refoulée (R),
- ensuite, on installe un outillage de façonnage (16a-20b) sur la section tubulaire refoulée (Rs), cet outillage présentant une cavité (16c, 16d), qui façonne une forme creuse correspondant à la forme finale du bombement à fabriquer, et
- par l'application de forces à action radiale grâce à l'outillage de façonnage (16a-20b), le bombement est formé à partir de la section tubulaire refoulée (Rs).

2. Procédé selon la revendication 1, caractérisé en ce que la pièce tubulaire (R) est maintenue pendant le façonnage effectué au moyen de l'outil de façonnage (16a-20b) sous la sollicitation exercée par la force de pression axiale (Da).

3. Procédé selon la revendication 1 ou 2, caractérisé en ce que, à la fin de la procédure de façonnage sur l'outillage de façonnage (16a-20b) placé sur la pièce tubulaire (R), la pression intérieure (Pi) de la pièce tubulaire (R) est acceléléré.

4. Procédé selon une des revendications précédentes, caractérisé en ce que, sur la pièce tubulaire (R), plusieurs bombements se suivant les uns les autres sont fabriqués par étapes et en ce que l'étaiement radial est à chaque fois réalisé par l'outillage de façonnage correspondant (16a-20b) qui a été utilisé pour la fabrication préalable de chaque bombement.

5. Procédé selon une des revendications précédentes, caractérisé en ce que plusieurs bombements sont fabriqués sur la pièce tubulaire (R), alors que, à commencer par le bombement situé à l'extrémité avant de la pièce tubulaire (R) dans le sens d'action de la force de pression axiale (Da), les bombements sont formés les uns après les autres par étapes.

6. Procédé selon une des revendications 1 à 4, caractérisé en ce que plusieurs bombements sont fabriqués sur la pièce tubulaire (R), par le fait que la pièce tubulaire (R) est frappée à ses deux extrémités par une force de pression à action axiale (Da) et que les bombements sont formés par paires à partir de la paire centrale de bombements.

7. Dispositif pour la fabrication d'un arbre qui comporte au moins un bombement, comme un palier élévateur, une came (N1, N2) ou un talon de palier, à partir d'une pièce tubulaire (R)
- avec une installation d'étaiement prévue pour serrer la pièce tubulaire (R) en l'enserrant radialement,
- avec une première installation génératrice de pression (3, 4) au moyen de laquelle la pièce tubulaire (R) peut être frappée dans le sens axial par une force de pression (Da),
- avec une deuxième installation génératrice de pression (12), au moyen de laquelle un moyen de pression introduit dans le compartiment intérieur (Ri) de la pièce tubulaire (R) peut recevoir la pression, et
- avec un outillage de façonnage comportant au moins une division qui peut être installé dans le sens radial sur la pièce tubulaire (R) et qui comporte une cavité qui façonne la forme finale creuse correspondante du bombement à fabriquer.

8. Dispositif selon la revendication 7, caractérisé en ce que l'outillage de façonnage est conçu en tranches.

9. Dispositif selon la revendication 8, caractérisé en ce que, pour la fabrication d'arbres avec plusieurs bombements, plusieurs outillages de façonnage sont placés l'un à côté de l'autre comme des tranches dans le sens de l'axe du dispositif.

10. Dispositif selon la revendication 9, caractérisé en ce que les outillages de façonnage constituent l'installation d'étaiement.

11. Dispositif selon une des revendications 7 à 10, caractérisé en ce que l'outillage de façonnage est divisé au milieu.

12. Dispositif selon une des revendications 7 à 11, caractérisé en ce que les parties (16a-20b) de l'outillage de façonnage sont couplées entre elles par fermeture géométrique.
